# EUROPEAN PATENT SPECIFICATION

(11) **EP 0 567 436 B1**
(45) Date of publication and mention of the grant of the patent: **12.07.1995**
(21) Application number: 93810289.4
(22) Date of filing: 21.04.1993
(51) Int. Cl.: B05B 5/04, F16C 32/06, B05B 3/10

(54) **A spray painting nozzle**
Farbspritzdüse
Buse de peinture par pulvérisation

(30) Priority: 23.04.1992 SE 9201274
(43) Date of publication of application: 27.10.1993
(73) Proprietor: E. FISCHER AG SFI-SCHLEIFSPINDELFABRIK, CH-3363 Oberoenz (CH)
(72) Inventor: Lind, Björn, S-427 00 Billdall (SE)
(74) Representative: AMMANN PATENTANWAELTE AG BERN

(56) References cited:
- EP-A- 0 209 447
- DE-B- 2 349 072
- US-A- 4 467 968
- PATENT ABSTRACTS OF JAPAN vol. 010, no. 176 (M-491)20 June 1986 & JP-A-61 025 742

## Description

The present invention refers to a spray painting nozzle designed as a spindle supported in a gas bearing and of the type provided with a rotatable spray painting cup, referred to as a spray painting bell and in accordance with the preamble of the accompanying claim 1.

Such a spray painting nozzle is known from EP-A-0 209 447. This prior spray painting nozzle has a relatively long tubular rotating shaft with pairs of magnetic radial bearings axially spaced from each other and a pair of axial air bearings between said magnetic radial bearings. This nozzle needs pairs of separate magnetic bearings and air bearings respectively axially spaced from each other along the rotating shaft. Due to the axially long hollow shaft air and paint have to be admitted through a long path.

The purpose of the present invention is to provide a spray painting nozzle which can be driven at very high speeds (up to 100.000 rpm) without giving problems regarding the supply of the medium to be sprayed, unbalance and the like and which is of simple and compact design. This is achieved by the structure defined in the characterizing part of claim 1.

It has been known from DE-A-2 349 072 to axially load an air bearing by magnetic forces In this prior nozzle the axial bearing means are axially spaced from the radial bearings, this resulting in a long construction.

Hereinafter the invention will be further described with reference to embodiments shown in the accompanying drawings.
- Fig. 1: shows in a vertical cross-section a spray painting nozzle according to the invention.
- Fig. 2: is an enlarged part view of the nozzle according to Fig. 1,
- Fig. 3: is a cross-section corresponding to Fig. 1 through a second embodiment of the invention, and
- Fig. 4: shows the possibility of providing the spray painting nozzle according to the invention with different types of spray painting units.

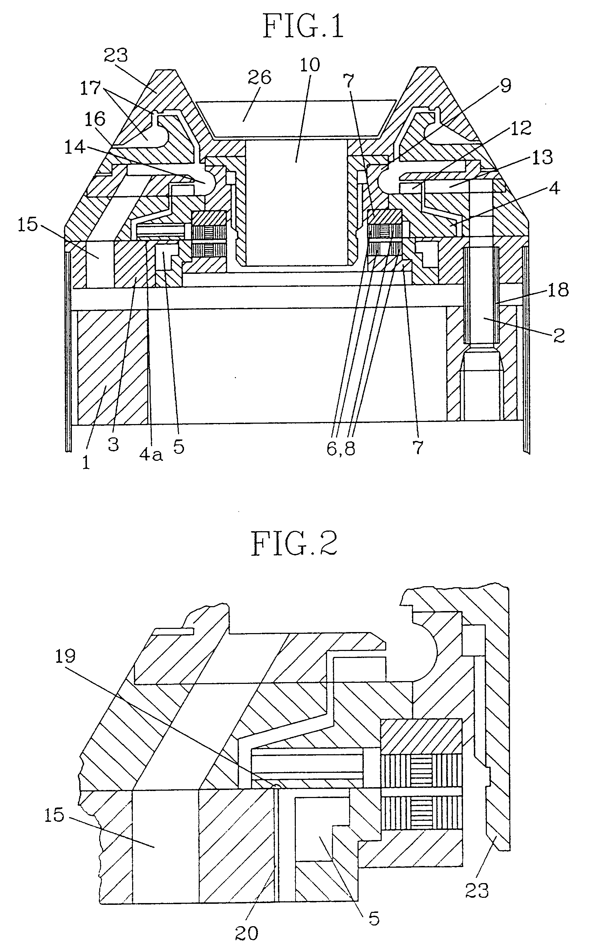

Fig. 1 shows schematically in cross-section an embodiment of a gas-supported spindle according to the invention, and which incorporates a supporting structure 1 with a number of channels 2 for pressurized gas, preferably compressed air, whereby in the drawing is shown only one such channel, whereas the structure may incorporate e.g. six such channels, arranged spaced apart along a substantially round path. The supporting structure 1 carries a lower, nonrotatable part 3 of a gas bearing, the other, rotating part 4 of which has a bearing surface, which is plane-parallel to the bearing surface of the stationary lower part. One of the not shown gas channels opens in an annular chamber 5, provided in the stationary bearing part, and communicating via not shown openings with the plane 4a of the gas bearing, and when the pressurized gas is pressed in between the bearing surfaces, these surfaces are urged apart axially thus that a thin slot is created between the bearing surfaces. In connection to the bearing surfaces there is arranged a number of magnets 6 positioned symmetrically about the centre of rotation, which magnets are mutually interconnected by means of short-circuiting rings 7, and intended to limit the size of the slot. Furthermore there are magnets 8 adapted to exert a magnetic force, which centers the rotating part in relation to the stationary part. The rotating bearing part 4 is connected to an internally threaded rotor part 9, in which is screwed in a detachable outer rotor part 23 having an internal, central axial through-channel, which functions as a supply path 10 for the medium to be sprayed, and which acts as a holder for a spray painting cup 26. The cup 26 may alternatively be a part integral with the outer rotor part.

In the embodiment shown the rotating bearing part 4 is equipped with structures 12 acting as turbine blades and in the stationary part is provided with at least one, and preferably several symmetrically arranged turbine inlets 13, which communicate with one of said gas channels 2 each. Alternatively the internally threaded rotor part may be equipped with said structures 12.

The stationary part is provided with internally opening exhaust channels 14, 15 for the driving gas of the turbine blades, at the same time as the stationary part and the detachable rotor part are designed to form a slot-shaped outlet 16 with a sealing labyrinth 17 between them.

In the embodiment shown, the channels 2 for supply of gas to the bearing, to turbine blades, and possibly also for a not further shown brake device, are arranged to extend through spring-elastic damper means 18 provided as elastic suspesions for the stationary part relative to the supporting structure.

Fig. 2 shows in bigger scale a detail from Fig. 1, whereby in one of the bearing parts, here in the rotating part, is provided a small chamber 19, open towards the bearing surface, and which during operation by the pressure gas will obtain the same over-pressure, as that prevailing between the bearing surfaces. In the other bearing part, in the example shown, the stationary part, there is provided a thin channel 20 communicating with the surroundings, in a position, which means that the chamber 19 during the rotation of the rotating bearing part, once per rotation over 360° will be situated just in front of the thin channel 20, whereby the pressure in the chamber is reduced rapidly resulting in a pressure shock, which can be detected at the end of the channel facing away from the chamber. This detection may be used as an indication or recording of the current rotational speed by means of a not shown device, e.g. a microphone, a pressure sensitive sensor or the like.

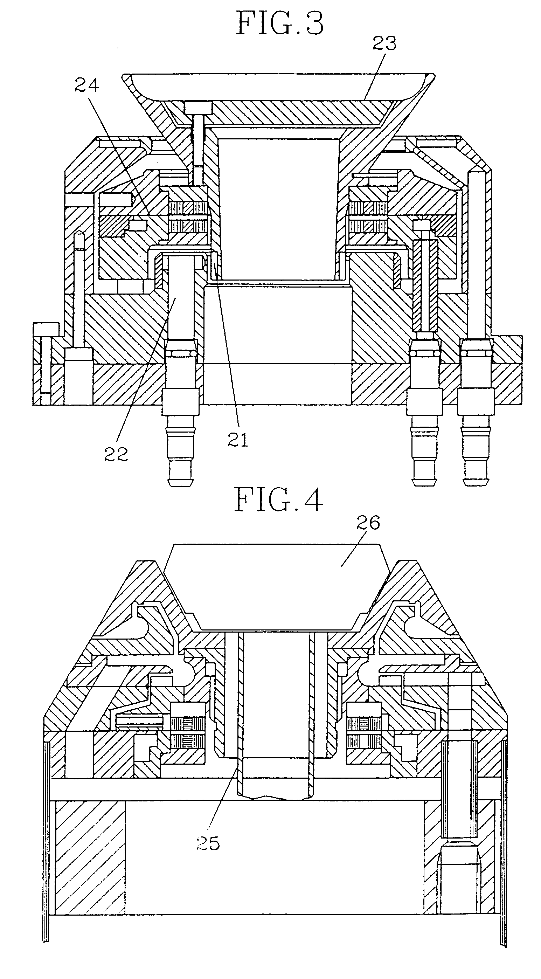

In the embodiment of the spray painting nozzle shown in Fig.s 1 and 2, the turbine blades are provided adjacent the forward end of the nozzle, i.e. after the gas bearing and the stacks of magnets, but as shown in a modified embodiment in Fig. 3, the turbine blades 21 and their air inlets 22 may very well be arranged at the rearward part of the rotating part 23, i.e. before the gas bearing 24 and the stack of magnets, and it is also quite possible to drive the rotating part by letting it be the rotor of an electro motor, the stator of which is provided in or forms a portion of the stationary part.

In Fig. 4 is shown an embodiment of the spray painting nozzle according to the invention corresponding to that according to Fig. 1, wherein there is provided in the supply path 10 for the spray medium a supply tube 25, which extends through the plane 4a of the gas bearing and is surrounded by the gas bearing, and to which can be connected different spray painting units 26 of appropriate design for different painting purposes. Hereby it should be observed that the rotating part 23 may be designed with a spray painting cup integral therewith or may be provided with and carry a separate spray painting cup 26.

## Claims

1. A spray painting nozzle comprising a spindle supported by a gas bearing means (3, 4), the spindle comprising a stationary part (3) and a rotatable part (4) rotatably supported in relation thereto, a rotatable spray painting cup (26) adapted to be driven by a drive unit (12, 13) and supported on the rotatable part (4), supporting means for the spray painting cup comprising mutually plane parallel bearing surfaces formed in the stationary and in the rotatable parts respectively, means (2, 5) for supplying a gaseous medium into a slot between the mutually plane parallel bearing surfaces so as to generate an axial gas bearing therebetween, magnet means (6, 8) for guiding the rotatable part (4) radially by exerting a magnetic force so as to center the rotatable part in relation to the stationary part (3) wherein for supply of spray medium to the spray painting cup (26), there is provided a supply path (10) extending through the plane (4a) of the gas bearing, characterized in that the gas bearing comprises a single pair of plane-parallel surfaces and a single slot therebetween extending in a radial plane, and the magnet means comprising radially inner magnet means (6) and radially outer magnet means (8) in the stationary part and in the rotatable part, the radially inner magnet means (6) and the radially outer magnet means (8) respectively being symmetrically opposite to each other with an air gap between them substantially in the plane (4a) of the gas bearing, the magnet means (6, 8) exerting an axial force between the stationary part and the rotatable part and upon the air bearing respectively and centering the rotatable part relative to the stationary part.

2. A nozzle according to claim 1, wherein the stationary part and the rotatable part comprise pairs of radially spaced magnet means.

3. A nozzle according to claim 2, wherein the magnet means are bridged by magnetic short-circuits.

4. A spray painting nozzle according to any one of claims 1 to 3, caracterized in that the stationary part (3) is equipped with a central axial through-channel for supply of spray medium to a central axial channel (10) in the rotatable part (4).

5. A spray painting nozzle according to any one of claims 1 to 4, characterized in that the rotatable part (4) is provided with structures designed as turbine blades (12), and that in the stationary part (3) are provided at least one turbine nozzle (13) adapted to supply driving medium to said structures for driving the rotatable part.

6. A spray painting nozzle according to anyone of claims 1 to 5, characterized in that the stator part (3) is provided with a damping system in form of elastic dampers (18) and spring members adapted during operation to give the rotor a smooth running about its mass centre as soon as a critical rotational speed lower that the intended working speed has been exceeded.

7. A spray painting nozzle according to anyone of the preceding claims, characterized in that a chamber (9) is provided in at least one of the gas bearing surfaces, which chamber is adapted during operation to take up the overpressure prevailing in the gas bearing, and adapted during the relative rotation of the bearing parts (3, 4) at least once during rotation over 360° to be brought in communication with at least one opening (20), freely communicating with the surrounding atmosphere, for creating pressure shocks intended for indication and/or recording of the rotational speed.

## Patentansprüche

1. Farbspritzdüse, mit einer von Gaslagermitteln (3, 4) getragenen Welle, die ein ortsfestes Teil (3) und ein dreh-bar dazu gelagertes Rotationsteil (4) aufweist, mit einem drehbaren Farbsprühbecher (26), der zum Antrieb durch eine Antriebseinheit (12, 13) vorgesehen ist und vom Rotationsteil (4) getragen wird, mit Trägermitteln für den Farbsprühbecher, die planparallele Lagerflächen aufweisen, welche im ortsfesten Teil bzw. im Rotationsteil vorhanden sind, mit Mitteln (2, 5) zur Zufuhr eines gasförmigen Mediums in einen Schlitz zwischen den planparallelen Lagerflächen, um zwischen ihnen ein axiales Gaslager zu bilden, mit Magnetmitteln (6, 8) zur radialen Führung des Rotationsteils (4) durch Ausübung einer Magnetkraft zur Zentrierung des Rotationsteils gegenüber dem ortsfesten Teil (3), wobei zur Zufuhr von Sprühmedium zum Farbsprühbecher (26) eine Zufuhrleitung (10) vorgesehen ist, die sich durch die Ebene (4a) des Gaslagers erstreckt, dadurch gekennzeichnet, dass das Gaslager ein einziges Paar von planparallelen Flächen und einen einzigen, sich radial erstreckenden Schlitz dazwischen aufweist, und dass die Magnetmittel aus radial inneren Magnetmitteln (6) und radial äusseren Magnetmitteln im ortsfesten Teil und im Rotationsteil bestehen, wobei die radial inneren Magnetmittel (6) und die radial äusseren Magnetmittel (8) sich mit einem Luftspalt im wesentlichen in der Ebene (4a) des Gaslagers symmetrisch gegenüberliegen und die Magnetmittel (6, 8) eine Axialkraft zwischen dem ortsfesten Teil und dem Rotationsteil bzw. auf das Gaslager ausüben und das Rotationsteil gegenüber dem ortsfesten Teil zentrieren.

2. Düse nach Anspruch 1, worin das ortsfeste Teil und das Rotationsteil Paare von Magnetmitteln im radialen Abstand aufweisen.

3. Düse nach Anspruch 2, worin die Magnetmittel durch magnetische Kurzschlüsse miteinander verbrückt sind.

4. Farbspritzdüse nach einem der Ansprüche 1 bis 3, dadurch gekennzeichnet, dass das ortsfeste Teil (3) mit einem mittigen axialen Durchgangskanal zur Zufuhr von Sprühmedium zu einer mittigen axialen Leitung (10) im Rotationsteil (4) versehen ist.

5. Farbspritzdüse nach einem der Ansprüche 1 bis 4, dadurch gekennzeichnet, dass das Rotationsteil (4) mit Auf-bauten versehen ist, die als Turbinenschaufeln (12) ausgebildet sind, und dass im ortsfesten Teil (3) mindestens eine Turbinendüse (13) vorgesehen ist, die zur Zufuhr von Antriebsmedium zu den genannten Aufbauten zwecks Antrieb des Rotationsteils eingerichtet ist.

6. Farbspritzdüse nach einem der Ansprüche 1 bis 5, dadurch gekennzeichnet, dass das Statorteil (3) mit einem Dämpfungssystem in Form elastischer Dämpfer (18) und Federmitteln versehen ist, die dazu eingerichtet sind, beim Betrieb einen ruhigen Lauf um sein Massenzentrum zu gewährleisten, sobald eine kritische Drehzahl überschritten wird, die unter der Betriebsdrehzahl liegt.

7. Farbspritzdüse nach einem der vorstehenden Ansprüche, dadurch gekennzeichnet, dass in mindestens einer der Gaslagerflächen eine Kammer (9) ausgespart ist, die dazu bestimmt ist, beim Betrieb den im Gaslager herrschenden Überdruck aufzunehmen und so eingerichtet ist, dass sie bei der Relativbewegung der Lagerteile (3, 4) mindestens einmal bei einer Rotation um 360° in Verbindung mit mindestens einer Öffnung (20) kommt, die mit der umgebenden Atmosphäre frei verbunden ist und dadurch Druckstösse zur Anzeige und/oder Aufzeichnung der Drehzahl erzeugt.

## Revendications

1. Buse de peinture par pulvérisation, comprenant un arbre supporté par un moyen de coussinet gazeux (3, 4), l'arbre comportant une partie stationnaire (3) et une partie rotative (4) supportée pour rotation par rapport à la première, une coupe de peinture par pulvérisation (26) adaptée pour être entraînée par une unité d'entraînement (12, 13) et supportée par la partie rotative (4), des moyens pour supporter la coupe de peinture par pulvérisation, comprenant des surfaces planes et parallèles formées dans les parties stationnaire et rotative, respectivement, des moyens (2, 5) pour amener un milieu gazeux dans une fente entre les surfaces planes et parallèles du coussinet pour engendrer un coussinet gazeux entre elles, des moyens d'aimant (6, 8) pour guider la partie rotative (4) radialement en exerçant une force magnétique afin de centrer la partie rotative par rapport à la partie stationnaire (3), un cheminement d'alimentation (10) s'étendant à travers le plan (4a) du coussinet gazeux étant prévu pour alimenter la coupe de peinture par pulvérisation (26) en milieu à pulvériser, caractérisée en ce que le coussinet gazeux comprend une seule paire de surfaces planes et parallèles et une seule fente entre elles, s'étendant dans un plan radial, et que les moyens d'aimant comprennent des moyens d'aimant radialement à l'intérieur (6) et des moyens d'aimant radialement à l'extérieur (8) dans la partie stationnaire et la partie rotative, les moyens d'aimant intérieurs (6) et les moyens d'aimant extérieurs (8), respectivement, étant disposés symétriquement en regard l'un à l'autre en laissant une espace d'air substantiellement dans le plan (4a) du coussinet gazeux, les moyens d'aimant (6, 8) exerçant une force axiale entre la partie stationnaire et la partie rotative et sur le coussinet gazeux, respectivement, en centrant ainsi la partie rotative par rapport à la partie stationnaire.

2. Buse selon la revendication 1, dans laquelle la partie stationnaire et la partie rotative comprennent des paires de moyens d'aimant distantes radialement.

3. Buse selon la revendication 2, dans laquelle les moyens d'aimant sont pontés par des courts-circuits magnétiques.

4. Buse de peinture par pulvérisation selon l'une quelconque des revendications 1 à 3, caractérisée en ce que la partie stationnaire (3) est équipée d'une conduite axiale centrale traversante pour amener du milieu à pulvériser à une canalisation axiale centrale (10) dans la partie rotative (4).

5. Buse de peinture par pulvérisation selon l'une quelconque des revendications 1 à 4, caractérisée en ce que la partie rotative (4) est munie de structures conçues comme pales de turbine (12). et qu'au moins une tuyère de turbine (13) est prévue dans la partie stationnaire (3) agencée pour amener le milieu d'entraînement vers la dite structure afin d'entraîner la partie rotative.

6. Buse de peinture par pulvérisation selon l'une quelconque des revendications 1 à 5, caractérisée en ce que la partie faisant stator (3) est munie d'un système d'amortissement sous forme d'amortisseurs élastiques (18) et d'éléments à ressort agencés pour conférer au rotor une rotation sans vibrations autour de son centre massique dès qu'une vitesse rotative critique, inférieure à la vitesse de travail nominale, est dépassée.

7. Buse de peinture par pulvérisation selon l'une quelconque des revendications précédentes, caractérisée en ce qu'une chambre (9) est prévue dans au moins une des surfaces du coussinet gazeux, la dite chambre étant agencée à recevoir, en service, la surpression prévalant dans le coussinet gazeux, et agencée à être amenée, au cours de la rotation relative des parties du coussinet gazeux, une fois au moins pendant la rotation de 360°, en connexion avec au moins une ouverture (20) librement communiquant avec l'atmosphère environnante afin d'engendrer des chocs de pression prévus pour l'indication et/ou l'enregistrement de la vitesse de rotation.
